# EUROPÄISCHE PATENTSCHRIFT

(11) **EP 2 974 961 B1**
(45) Veröffentlichungstag und Bekanntmachung des Hinweises auf die Patenterteilung: **26.04.2017**
(21) Anmeldenummer: 14177056.0
(22) Anmeldetag: 15.07.2014
(51) Int. Cl.: B64D 11/06

(54) **Sitzbaugruppe, Sitzanordnung und Passagierkabine für ein Luftfahrzeug**
Seat assembly, seat arrangement and passenger cabin for an aircraft
Composant de siège, agencement de siège et cabine de passager pour un aéronef

(43) Veröffentlichungstag der Anmeldung: 20.01.2016
(73) Patentinhaber: Airbus Defence and Space GmbH, 85521 Ottobrunn (DE)
(72) Erfinder: Schmidt-Schäffer, Tobias, 80331 München (DE)
(74) Vertreter: Kastel, Stefan

(56) Entgegenhaltungen:
- EP-A2- 2 219 944
- WO-A2-2014/087387
- GB-A- 2 454 751
- US-A1- 2007 262 625

## Beschreibung

Die Erfindung betrifft eine Sitzbaugruppe zum Schaffen wenigstens eines Sitzplatzes einer Sitzanordnung für eine Passagierkabine eines Luftfahrzeuges, mit wenigstens einem Sitzaufbau, der eine Sitzlehne zum Bilden einer Rückenlehnenfläche und ein Sitzkissenelement zum Bilden einer Sitzfläche aufweist, und einer Passagierraumabtrennung zum räumlichen Abtrennen eines Passagierraums des Sitzplatzes, welche den Sitzaufbau zumindest teilweise umgibt und einen Zugang zu dem Sitzaufbau freilässt. Weiter betrifft die Erfindung eine Sitzanordnung für eine Passagierkabine eines Luftfahrzeuges, umfassend mehrere derartiger Sitzbaugruppen. Schließlich betrifft die Erfindung eine Passagierkabine eines Luftfahrzeugs, insbesondere eines Flugzeugs, umfassend eine derartige Sitzbaugruppe und/oder eine derartige Sitzanordnung.

Die Erfindung befasst sich insbesondere mit der Ausbildung und Anordnung von komfortablen Sitzen in Flugzeugkabinen, und mehr insbesondere mit der Optimierung und/oder Maximierung der Anzahl von Business-Class-Sitzen in Flugzeugkabinen von Langstreckenflugzeugen, welche Business-Class-Sitze sowohl das Sitzen wie auch das Liegen ermöglichen, wobei Zulassungsvorschriften und geometrische Randbedingungen zu beachten sind. Insbesondere sollen Sitze zur Verfügungstellung eines Einzelplatzes geschaffen werden, die in einer Liegeposition eine flache Liegefläche schaffen, welche von möglichst allen Passagieren bequem benutzt werden können. Beispielsweise sollte eine Liegefläche in wenigstens einer Dimension eine Ausdehnung von etwa 195 cm oder größer haben. Weiter soll ein möglichst komfortabler Sitz mit einer Sitzbreite von ca. 20" (ca. 51 cm) geschaffen werden.

Insbesondere soll zu jedem Einzelsitz ein direkter Gangzugang möglich sein; der Passagier soll seinen Sitz erreichen, ohne dass andere Passagiere aufstehen müssen.

Aus der EP 1 211 176 B1 ist eine Anordnung von Passagiersitzen in einer Flugzeugpassagierkabine bekannt, die eine Sitzbaugruppe, eine Sitzanordnung sowie eine Passagierkabine gemäß dem Oberbegriff des Anspruchs 1 offenbart. Wie bei der Erfindung geht es bei diesem nächstliegenden Stand der Technik darum, eine Sitzbaugruppe, eine Sitzanordnung sowie eine Passagierkabine zu schaffen, wo mit einem begrenzten Platzangebot eine optimale Kabinenausnutzung erreichbar ist und für den Passagier ausreichend Bewegungsraum und Privatsphäre zur Verfügung gestellt wird, damit insbesondere bei Langstreckenflügen Komfort und Wohlbefinden erreicht wird.

Als weiterer Stand der Technik sind die Sitzbaugruppen, Sitzanordnungen und Passagierkabinen der US 8 768 311 B2, US 8 690 254 B2, US 8 720 821 B2, US 2013/0043345 A1, US 7 721 991 B2 und der US 7 721 991 B2 zu nennen.

Aus der US2007/0262625 A1, der WO2014/087387 A2, der GB 2 454 751 A und der WO2009/077717 A2 sind Sitzbaugruppen, Sitzanordnungen und Passagierkabinen für die Business-Klasse von Langstreckenflugzeugen bekannt, bei denen sich die Sitze zumindest zwischen einer normalen Sitzposition mit aufrechter Rückenlehne und einer Liegeposition, in der ein Sitzkissen und die Sitzlehne eine horizontale Liegefläche bilden, bewegbar sind. Hierzu lässt sich das Sitzkissen horizontal vorziehen, wobei gleichzeitig eine an dem Sitzkissen angelenkte Rückenlehne aus einer aufrechten Position in eine geneigte Position verfahren wird.

Der Nachteil der bisher bekannten Sitzbaugruppen, Sitzanordnungen und Passagierkabinen für die Business-Klasse von Langstreckenflugzeugen liegt in einer weniger effizienten Raumausnutzung, so dass weniger Sitze mit den für Business-Class-Sitze gewünschten Eigenschaften auf gleicher Fläche zur Verfügung gestellt werden.

Der Erfindung liegt die Aufgabe zugrunde, eine Sitzbaugruppe, eine damit bildbare Sitzanordnung sowie eine damit versehene Passagierkabine zu schaffen, mit der auf geringerem Raum mehr Sitzplätze mit eigenem Zugang zur Verfügung gestellt werden können.

Diese Aufgabe wird durch die Gegenstände der unabhängige Ansprüche gelöst.

Vorteilhafte Ausgestaltungen sind Gegenstand der Unteransprüche.

Die Erfindung schafft gemäß einem ersten Aspekt davon eine Sitzbaugruppe zum Bilden wenigstens eines Sitzplatzes einer Sitzanordnung für eine Passagierkabine eines Luftfahrzeuges - insbesondere eines Flugzeuges -, mit wenigstens einem Sitzaufbau, der eine Sitzlehne zum Bilden einer Rückenlehnenfläche und ein Sitzkissenelement zum Bilden einer Sitzfläche aufweist, und einer Passagierraumabtrennung zum räumlichen Abtrennen eines Passagierraums des Sitzplatzes, welche den Sitzaufbau zumindest teilweise umgibt und einen Zugang zu dem Sitzaufbau freilässt, wobei das Sitzkissenelement zwischen einer Komfortposition, in der das Sitzkissenelement zum Bereitstellen einer größeren Sitzfläche weiter in den Zugang hineinragt und einer Zugangsposition, in der das Sitzkissenelement zum Ermöglichen eines breiteren Zugangs weniger weit oder gar nicht in den Zugang hineinragt, bewegbar ist.

Es ist bevorzugt, dass das Sitzkissenelement zur Bewegung von der Komfortposition in die Zugangsposition horizontal unter die Sitzlehne verschiebbar ist. Erfindungsgemäß ist vorgesehen, dass das Sitzkissenelement derart bewegbar ausgebildet ist, dass es eine in der Tiefe variable Sitzfläche zur Verfügung stellt.

Erfindungsgemäß ist vorgesehen, dass das Sitzkissenelement zwischen der Komfortposition und der Zugangsposition in der horizontalen Richtung gesehen oder projiziert um ca. 7 cm bis ca. 26 cm bewegbar ist, um so in der Komfortposition eine um ca. 7 cm bis 26 cm tiefere Sitzfläche als in der Zugangsposition zur Verfügung zu stellen.

Es ist bevorzugt, dass der Sitzaufbau ein Fuß- und/oder Beinauflageelement mit einer Fuß- und/oder Beinablagefläche aufweist, das zwischen einer Benutzungsposition und einer Zugangsposition bewegbar ist.

Es ist bevorzugt, dass das Fuß- und/oder Beinauflageelement relativ zu dem Sitzkissenelement derart klappbar ist, dass die Fuß- und/oder Beinablagefläche in der Benutzungsposition eine Verlängerung der Sitzfläche bildet.

Es ist bevorzugt, dass die Sitzlehne zwischen einer aufrechten Position und einer Liegeposition bewegbar ist.

Es ist bevorzugt, dass in einer Liegeposition der Sitzbaugruppe die Rückenlehnenfläche und die Sitzfläche bei in die Liegeposition verfahrenem Sitzaufbau gemeinsam zumindest einen Teil einer im Wesentlichen horizontalen Liegefläche bilden.

Es ist bevorzugt, dass die Sitzlehne in einer Liegeposition der Sitzbaugruppe in einen Raum eingreift, welcher durch das Sitzkissenelement in der Zugangsposition belegt wird.

Es ist bevorzugt, dass der Sitzaufbau in eine Liegeposition bewegbar ist, in der die Rückenlehnenfläche, die Sitzfläche und eine an einem Fuß- und/oder Beinauflageelement ausgebildete Fuß- und/oder Beinablagefläche eine im Wesentlichen flache oder ebene Liegefläche bilden.

Es ist bevorzugt, dass das Fuß- und/oder Beinauflageelement in der Liegeposition auf einer Stauraumbegrenzung aufliegt.

Es ist bevorzugt, dass die Passagierraumabtrennung einen Stauraum mit einer Stauraumbegrenzung aufweist, die in der Liegeposition zur Unterstützung einer Fuß- und/oder Beinauflagefläche nutzbar ist.

Es ist bevorzugt, dass die Sitzbaugruppe in der Liegeposition eine Liegefläche schafft, die in wenigstens einer Richtung eine Länge von mindestens 180 cm bis 210 cm, vorzugsweise ca. 195 cm aufweist.

Es ist bevorzugt, dass die Passagierraumabtrennung einen Ausschnitt und/oder eine Ausbuchtung zum Ermöglichen einer Verschiebung des Sitzkissenelements in die Liegeposition aufweist.

Es ist bevorzugt, dass die Sitzbaugruppe in Draufsicht eine tropfenförmige und/oder im Wesentlichen parallelogrammartige Umrisskontur, vorzugsweise mit einem schmaleren Fußendbereich und einem breiteren, den Sitzaufbau in der Zugangs- oder Komfortposition umfassenden breiteren Rückenendbereich, hat.

Es ist bevorzugt, dass die Sitzbaugruppe eine hinsichtlich einer Längsmittelebene unsymmetrische Umrisskontur aufweist.

Es ist bevorzugt, dass die Passagierraumabtrennung am Fußendbereich in Draufsicht einen vorderen Vorsprung aufweist, der das Vorderende der Passagierraumabtrennung bildet und der hinsichtlich einer Längsmittelebene zu einer Seite hin versetzt angeordnet ist.

Es ist bevorzugt, dass der vordere Vorsprung hinsichtlich der Längsmittelebene zu einer keinen Zugang aufweisenden Seite hin versetzt angeordnet ist.

Es ist bevorzugt, dass die Passagierraumabtrennung zwischen dem Vorderende und dem Zugang in Draufsicht gesehen eine sich nach hinten und zur Seite hin erstreckende Abschrägung und/oder eine sich nach hinten und zur Seite hin erstreckende bogenförmige Abrundung aufweist.

Es ist bevorzugt, dass die Passagierraumabtrennung am Rückenendbereich in Draufsicht einen Vorsprung aufweist, der das rückwärtige Ende der Passagierraumabtrennung bildet und der hinsichtlich einer Längsmittelebene zu einer Seite hin versetzt angeordnet ist.

Es ist bevorzugt, dass das rückwärtige Ende zu einer einen Zugang aufweisenden Seite hin versetzt angeordnet ist.

Es ist bevorzugt, dass die Passagierraumabtrennung von dem rückwärtigen Ende zur Mitte und zu einer keinen Zugang aufweisenden Seite hin eine sich nach vorne erstreckende Abschrägung und/oder eine sich nach vorne erstreckende bogenförmige Abrundung aufweist.

Es ist bevorzugt, dass in einem Fußendbereich ein Staufach oder Staubehälter zum Schaffen eines durch den die Sitzbaugruppe benutzenden Passagier persönlich nutzbaren Stauraums untergebracht sind.

Gemäß einem weiteren Aspekt schafft die Erfindung eine Sitzanordnung für eine Passagierkabine eines Luftfahrzeuges, umfassend mehrere Sitzbaugruppen nach einer oder mehrerer der voranstehend beschriebenen Ausgestaltungen.

Es ist bevorzugt, dass ein Zugangsweg zu dem Zugang bei zumindest einigen der Sitzbaugruppen an einem Vorderende und/oder einem rückwärtigen Ende einer jeweils benachbarten Sitzbaugruppe vorbei führt und/oder davon eingegrenzt ist.

Es ist bevorzugt, dass Reihen seitlich benachbarter Sitzbaugruppen derart versetzt zueinander angeordnet sind, dass zwischen einem Vorderende einer in einer Reihe nachfolgenden Sitzbaugruppe und einem rückwärtigen Ende einer in der Reihe davor stehenden Sitzbaugruppe ein zu dem Zugang einer seitlich benachbarten Sitzbaugruppe mündender Zugangsabstand ausgebildet ist, um auch zu dem Sitzplatz der seitlich benachbarten Sitzbaugruppe einen eigenen Zugangsweg von einem Längsgang aus zu schaffen.

Es ist bevorzugt, dass ein Raum zwischen wenigstens zwei Sitzbaugruppen als Stauraum ausgebildet ist.

Es ist bevorzugt, dass Sitzbaugruppen von seitlichen Außenreihen mit ihren Fußendbereichen zur Außenseite hin geneigt angeordnet sind.

Es ist bevorzugt, dass Sitzbaugruppen einer ersten und einer zweiten benachbarten Mittelreihe jeweils zu der anderen der ersten und der zweiten Mittelreihe hin geneigt sind.

Es ist bevorzugt, dass sich Fußendbereiche von benachbarten Sitzbaugruppen in Draufsicht gesehen überlappen.

Es ist bevorzugt, dass wenigstens ein Rückenendbereich einer ersten Sitzbaugruppe in einen Zugang einer Passagierraumabtrennung einer benachbarten zweiten Sitzbaugruppe in Draufsicht die Umrisskontur derselben überlappend hineinragt.

Gemäß einem weiteren Aspekt schafft die Erfindung eine Passagierkabine eines Luftfahrzeuges, umfassend eine Sitzanordnung nach einer oder mehrerer der voranstehend beschriebenen Ausgestaltungen und/oder wenigstens eine oder mehrere der Sitzbaugruppen nach einer oder mehrerer der voranstehend beschriebenen Ausgestaltungen.

Gemäß bevorzugten Ausgestaltungen der Erfindung wird eine Sitzanordnung-Layout - und ein hierzu passender Sitz - Sitzbaugruppe - mit verschiebbarer Sitzfläche und optimierten Abmaßen vorgeschlagen. Vorzugsweise lässt sich die Sitzfläche unter die Rückenlehne verschieben. Die Abmaße sind vorzugsweise einem Fußabdruck nachgebildet.

Eine unter die Rückenlehne verschobene Sitzfläche ermöglicht auch bei eng nebeneinander stehenden Sitzbaugruppen einen bequemen Sitzzugang. Vorzugsweise ist ein Zugang seitlich unmittelbar vor einer Verankerung eines Sitzaufbaus vorgesehen, wobei sich ein die Sitzfläche zur Verfügung stellendes Sitzkissenelement in einer Komfortposition weit vorschieben lässt und dabei ohne Weiteres des kompletten Zugang oder einen Großteil des Zugangs versperren oder behindern kann.

In einer Zugangsposition wird die Sitzfläche vorzugsweise durch Verschieben des Sitzkissenelements unter die Rückenlehne in der (horizontalen) Tiefe kleiner eingestellt. Vorzugsweise ist in der Zugangsposition immer noch ein Sitzen - auf einer in der Tiefe verkleinerten - Sitzfläche möglich, und es ist ein bequemer Zugang durch einen seitlichen Zugang in einer Passagierraumabtrennung möglich.

Mit einer solchen Sitzbaugruppe lassen sich durch Aneinanderreihen mehrerer derartiger Sitzbaugruppen in unterschiedlichen Anordnungen optimierte Raumausnutzungen einer Passagierkabine erreichen. Benachbarte Sitze können mit ihrem Vorderende oder rückwärtigem Ende auch teilweise in eine seitliche Öffnung der Passagierraumabtrennung hineinragen und einen entsprechenden Zugang frei lassen.

Vorzugsweise wird eine variable Sitzfläche durch ein insbesondere in horizontaler Richtung verschiebbares Sitzkissenelement geschaffen. Insbesondere ist die Tiefe des Sitzes variabel.

Vorzugsweise schiebt sich die Sitzfläche für eine Zugangsposition unter die Rückenlehne. Eine Verschiebung kann beispielsweise um 5" (ca. 13 cm) erfolgen.

Vorzugsweise stellt ein Sitzaufbau im Liegezustand eine flache Liegefläche zur Verfügung. Unter einem Teil der so in der Liegeposition zur Verfügung gestellten Liegefläche kann ein Stauraum an einer Seitenwand (z.B. ein an einer Kabinenseitenwand vorgesehener Stauraum) untergebracht werden.

Die Liegefläche ist in wenigstens einer Dimension, insbesondere gemessen an oder in einer Diagonalen, zumindest ca. 195 cm lang.

Die Sitzbaugruppe, insbesondere eine Passagierraumabtrennung derselben, hat vorzugsweise eine zumindest in Draufsicht unsymmetrische Form mit einem schrägen oder abgebogenen Fußende. Die entsprechende Abschrägung oder Abbiegung oder Krümmung ermöglicht einen Zugang zu einem vom Gangbereich aus gesehen jenseits neben dieser Sitzbaugruppe befindlichen Sitzplatz einer weiteren benachbarten Sitzbaugruppe.

Für die Sitzanordnung kommen gemäß bevorzugter Ausgestaltungen vorzugsweise zwei besonders bevorzugte Anordnungsformen in Betracht. Bei einer ersten Sitzanordnung, die im Folgenden als Standard-Layout bezeichnet wird, wird eine näher zur Seitenwand angeordnete Sitzbaugruppe einer seitlich an einer Seitenwand der Passagierkabine anzuordnenden Außenreihe mit der Kopfposition weg vom Seitenrand bezüglich der Längsrichtung der Passagierkabine - entspricht der Flugrichtung - in Draufsicht gesehen um einen ersten Winkel, beispielsweise 5° bis 10°, insbesondere 8,2°, geneigt. Die Füße sind mehr zur Seitenwand hin ausgerichtet und liegen z.B. auf einem Seitenwand-Stauraum in der Liegeposition auf. Eine seitlich hierzu benachbarte Sitzbaugruppe einer zwischen der Außenreihe und dem ersten Gang angeordneten seitlichen Gangsitzreihe ist vorzugsweise um einen kleineren Winkel in die andere Richtung relativ zur Flugrichtung geneigt angeordnet, so dass der Fußbereich etwas näher zum Gang und die Kopfposition etwas näher zur Seitenwand ausgerichtet ist. Hierdurch kann der Sitzaufbau mit der Kopfposition den durch die Seitenneigung in der Außenseitenreihe zur Verfügung gestellten Platz einnehmen, und bei hohem Komfort können die Sitzbaugruppen näher zusammengestellt werden.

In einem Mittelbereich der Passagierkabine angeordnete Mittelreihen sind bei dem bevorzugten Standard-Layout vorzugsweise parallel in Flugrichtung angeordnet.

Bei einer zweiten bevorzugten Ausgestaltung der Sitzanordnung, die im Folgenden als Fischgrät-Layout bezeichnet wird (Englisch: herringbone) ist eine Schrägstellung der außenseitigen, näher zu der Seitenwand der Passagierkabine angeordneten Sitzbaugruppen, beispielsweise um 20° bis 40°, insbesondere 28,4°, derart vorgesehen, dass der Kopfbereich weg von der Seitenwand angeordnet ist und der Fuß mehr zur Seitenwand angeordnet ist. Mit einer solchen Schrägstellung können Sitzbaugruppen nach Art eines Fischgrät-Musters eng nebeneinander und hintereinander angeordnet werden und so einen optimalen Raum einnehmen. Im Mittelbereich sind benachbarte Sitze V-förmig angeordnet, wobei die Füße zur Mitte hin geneigt sind. Hier können Überlappungen der Fußbereiche vorgesehen sein.

Die Vorderenden und rückwärtigen Enden der Sitzbaugruppen, welche vorzugsweise durch die Passagierraumabtrennung gebildet werden, sind vorzugsweise mit seitlich versetzt angeordneten Enden mit Abschrägungen versehen, um einen Zugang zu dem benachbarten, versetzt angeordneten Sitzplatz zu ermöglichen.

Vorzugsweise wird eine variable Sitzfläche derart zur Verfügung gestellt, dass die Tiefe des Sitzes veränderbar ist. Vorzugsweise lässt sich die Sitzfläche unter die Rückenlehne schieben. Beispielsweise ist eine Verschiebung in horizontaler Richtung um 7" (ca. 18 cm) möglich. Ein Verschiebebereich kann zwischen 3" und 10" sinnvoll sein (zwischen ca. 7,5 cm und ca. 26 cm); dies kann sich nach dem jeweiligen Layout richten.

In einer Zugangsposition schiebt sich die Sitzfläche vorzugsweise unter die Rückenlehne, um den Zugang zum Sitz zu erleichtern. Je nach Layout ist ein Zugang von mindestens 5" oder mehr vorgegeben, etwa wie bei Economy-Klasse.

Bei einer Veränderung von der Zugangsposition in eine Komfortposition schiebt sich die Sitzfläche nach vorne. Vorzugsweise befindet sich die Sitzfläche dann nicht mehr unter der Rückenlehne, sondern ist vollständig aus dem Bereich unterhalb der Rückenlehne bis vor die Rückenlehne vorgefahren. Es ist ein komfortables Sitzen mit entsprechender Sitztiefe ermöglicht.

Weiter vorzugsweise ist eine Schlafposition möglich; hier klappt vorzugsweise die Rückenlehne nach hinten und nützt den Raum, der zuvor unterhalb der Rückenlehne benötigt wurde. Die Sitzfläche schiebt sich nach vorne. Eine eventuell vorhandene Beinauflage klappt nach oben. Zusammen mit einem Fußteil entsteht eine komplett flache Liegefläche.

Das Fußteil kann auf einem Seitenwand-Stauraum aufliegen und so den Raum ideal nutzen. Der Seitenwand-Stauraum behindert den Sitz nicht.

Der durch die Sitzbaugruppe zur Verfügung gestellte Sitz hat eine unsymmetrische Form, eine Krümmung auf der Rückseite ermöglicht einen Zugang.

Vorzugsweise kann ein Raum oberhalb des Fußbereichs und zwischen den Sitzen - je nach Layout - als Stauraum genutzt werden.

Die komplette Liegefläche hat vorzugsweise eine Länge von 195 cm in der Diagonalen.

Im Folgenden werden Vorteile bevorzugter Layouts erläutert.

Die verschiebbare Sitzfläche ermöglicht es, "dichtere" Layouts mit trotzdem direktem Zugang für jeden Sitz umzusetzen.

Es ist eine Überlappung der Sitze im Bereich der Fußstütze möglich.

In der beispielsweise durch eine Sitzverkleidung gebildeten Passagierraumabtrennung kann ein Ausschnitt oder eine Ausbuchtung vorgesehen sein, um eine Verschiebung der Sitzfläche zu einer Schlafposition zu ermöglichen.

In einem bevorzugten Standard-Layout sind vorzugsweise zwei Arten von Sitzen oder Sitzreihen vorgesehen. Die Sitze der Sitzreihe A sind zur Flugrichtung gedreht (ca. 5° bis 10°), wobei die Kopfposition weg von der Seitenwand und der Fußbereich auf den Seitenwand-Stauraum (sofern vorhanden) hin geneigt sind. Die Sitze B sind leicht gedreht zu A (insbesondere in der entgegen gesetzten Richtung; vorzugsweise ca. 2° bis 5°) für besseren Raumgewinn.

Bei Flugzeugen mit steilerer Seitenwand kann eine Drehung der Sitze kleiner ausfallen, um eine Gangbreite zu vergrößern.

Die mittleren Sitze können in Flugrichtung leicht gedreht zueinander sein, um einen Raumgewinn zu erhalten.

In einem bevorzugten Fischgrät-Layout haben die seitlichen Sitze eine Schrägstellung (z.B. 28,4°; Schrägstellungen im Bereich von 20° bis 35° je nach Layout sind möglich), so dass ein Kopfteil zum Gang versetzt ist und ein Fußteil zum Fenster unterhalb der gekrümmten Seitenwand geneigt ist. Bei der in der US 2013/0043345 A1 vorgeschlagenen Sitzanordnung ist z.B. nur ein Zugang vom Fußbereich kommend möglich; dies ist bei der bevorzugten Ausgestaltung der Erfindung anders. Eine Verschiebung der Sitzfläche ermöglicht einen Zugang mit Orientierung der Sitze in Richtung Fenstersicht; hierdurch ist das Schaffen einer größeren Privatsphäre möglich. Die Passagiere können weg vom Gang geneigt sitzen und können mit Rücken zum Gang sitzen.

Auch die mittleren Sitze können mit ihrem Fußbereich zur Mitte hin geneigt angeordnet werden und mit ihrem Kopfbereich hin zum Gang; dies ist mit der Anordnung der US 2013/0043345 A1 nicht möglich; dort muss ein Zugang vom Fußbereich her erfolgen. Bei der bevorzugten erfindungsgemäßen Anordnung ist auch eine leichte Überlappung im Fußbereich möglich.

Ein möglicher mechanischer Aufbau - auch andere Lösungen sind möglich - sieht vor, dass sich ein Sitzkissenelement bzw. eine Sitzfläche über eine Schiene in der Seitenverkleidung in Horizontalrichtung von der Zugangsposition zur Komfortposition verschiebt. Es kann ein Rollwagen vorgesehen sein, der in Horizontalrichtung von der Komfortposition zur Liegeposition verfahren wird, um die Sitzfläche mit Beinauflage von der Komfortposition zur Liegeposition zu verfahren und abzustützen. Eine Neigung der Sitzfläche kann über eine Vertikalschiene eingestellt werden.

Eine am Sitzkissenelement angelenkte Beinauflage kann über Hydraulikzylinder von unten aufklappen.

Die Mechanik lässt sich vorzugsweise komplett verkleiden.

Im Folgenden wird die Erfindung anhand der beigefügten Zeichnungen näher erläutert. Dabei zeigen:
- Fig. 1: eine perspektivische Ansicht auf einen Seitenwandbereich einer Ausführungsform einer Passagierkabine eines Luftfahrzeuges, wie insbesondere eines Flugzeuges, mit einer ersten Ausführungsform einer Sitzanordnung aus mehreren schräg hintereinander angeordneten Sitzbaugruppen - "Fischgrät-Layout" - in einer Zugangsposition, wobei eine erste Ausführungsform der Sitzbaugruppen dargestellt ist;
- Fig. 2: eine Darstellung vergleichbar Fig. 1 wobei Sitzaufbauten der Sitzbaugruppen eine Komfortposition innehaben;
- Fig. 3: eine Darstellung vergleichbar Fig. 1 wobei Sitzaufbauten der Sitzbaugruppen eine Liegeposition innehaben;
- Fig. 4: eine perspektivische Darstellung der Sitzanordnung von Fig. 1 bis 3, wobei drei benachbarte Sitzbaugruppen zum Vergleich dargestellt sind, von denen sich eine erste in der Zugangsposition, eine zweite in der Komfortposition und eine dritte in der Liegeposition befinden;
- Fig. 5: eine Draufsicht auf die in Fig. 4 in Perspektive dargestellte Sitzanordnung - Fischgrät-Layout in allen Positionen -;
- Fig. 6: eine Draufsicht auf eine einzelne Sitzbaugruppe zum Aufbauen vergleichbarerer Sitzanordnungen wie in den Fig. 1 bis 5, wobei eine zweite Ausführungsform der Sitzbaugruppe in der Zugangsposition dargestellt ist;
- Fig. 7: eine Darstellung wie in Fig. 6 mit der zweiten Ausführungsform der Sitzbaugruppe in Komfortposition;
- Fig. 8: eine Darstellung wie in Fig. 6 mit der zweiten Ausführungsform der Sitzbaugruppe in Liegeposition;
- Fig. 9: eine Seitenansicht der zweiten Ausführungsform der Sitzbaugruppe in Zugangsposition;
- Fig. 10: eine Darstellung wie in Fig. 9 mit der zweiten Ausführungsform der Sitzbaugruppe in Komfortposition;
- Fig. 11: eine Darstellung wie in Fig. 9 mit der zweiten Ausführungsform der Sitzbaugruppe in Liegeposition;
- Fig. 12: eine perspektivische Ansicht der zweiten Ausführungsform der Sitzbaugruppe in Liegeposition;

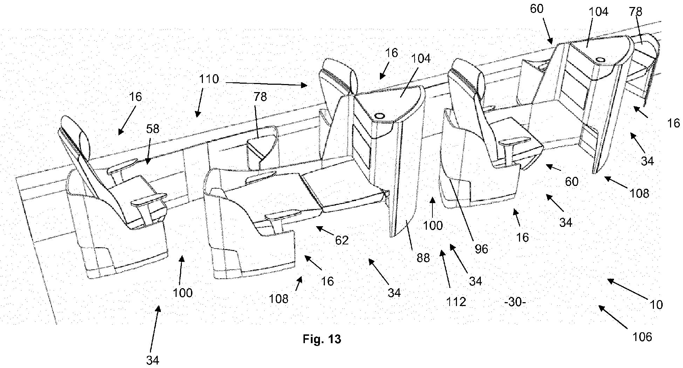

- Fig. 13: eine perspektivische Ansicht auf einen Seitenwandbereich einer weiteren Ausführungsform einer Passagierkabine eines Luftfahrzeuges, wie insbesondere eines Flugzeuges, mit einer zweiten Ausführungsform einer Sitzanordnung aus mehreren versetzt nebeneinander und hintereinander angeordneten Sitzbaugruppen - "Standard-Layout" - in einer Zugangsposition, wobei Sitzbaugruppen der ersten Ausführungsform in einer Außenreihe - z.B. Fensterreihe - und Sitzbaugruppen der zweiten Ausführungsform in einer mehr zur Mitte hin angeordneten benachbarten Reihe - z.B. Gangreihe - eingesetzt sind und in allen drei unterschiedlichen Positionen - Zugangsposition, Komfortposition und Liegeposition - dargestellt sind;
- Fig. 14: eine Darstellung wie in Fig. 13, aus einer anderen Perspektive;
- Fig. 15: eine Darstellung wie in Fig. 13, aus noch einer anderen Perspektive;
- Fig. 16: eine Draufsicht auf einen Bereich der zweiten Ausführungsform der Passagierkabine mit der zweiten Ausführungsform der Sitzanordnung in voller Breite über die Passagierkabine; die Sitzbaugruppen sind in Komfortposition mit durchgezogener Linie dargestellt und die Zugangsposition ist gestrichelt dargestellt;
- Fig. 17: eine Draufsicht auf einen Bereich der ersten Ausführungsform der Passagierkabine mit der ersten Ausführungsform der Sitzanordnung in voller Breite über die Passagierkabine; die Sitze sind in der Komfortposition mit durchgezogener Linie dargestellt; die Zugangsposition ist gestrichelt dargestellt;
- Fig. 18: eine Seitenansicht auf einen bei der ersten und der zweiten Ausführungsform der Sitzbaugruppe einsetzbaren Sitzaufbau in einer Zugangsposition;
- Fig. 19: eine Darstellung wie in Fig. 18 in der Komfortposition;
- Fig. 20: eine Darstellung wie in Fig. 19 in der Liegeposition; und
- Fig. 21: eine Seitenansicht auf eine Sitzbaugruppe gemäß der ersten Ausführungsform mit dem wie in Fig. 20 in Liegeposition dargestellten Sitzaufbau.

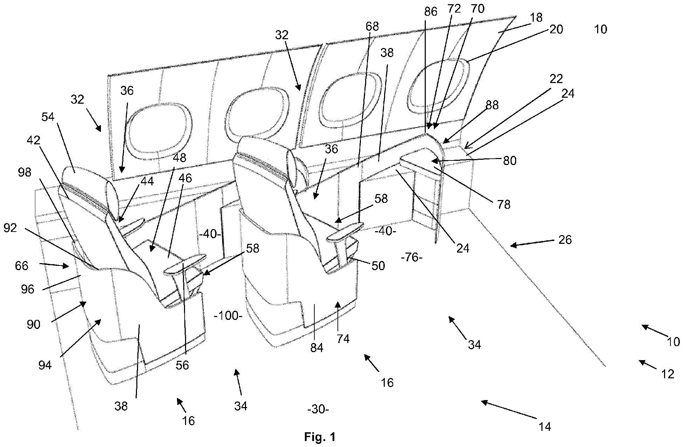

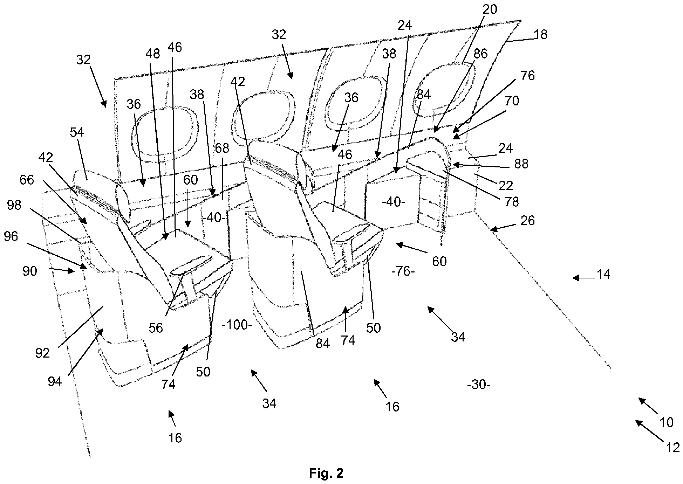

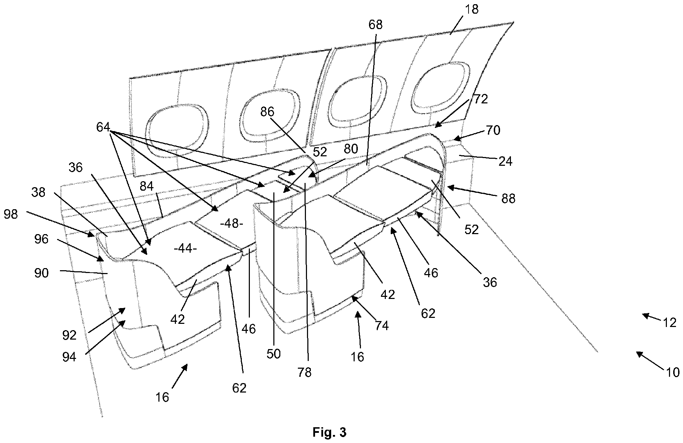

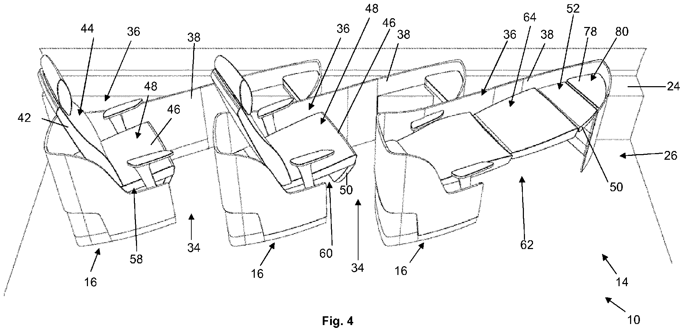

In den Fig. 1 bis 5 und 17 ist eine erste Ausführungsform einer Passagierkabine 10 eines Luftfahrzeuges, wie insbesondere eines Flugzeuges 12, mit einer ersten Ausführungsform einer Sitzanordnung 14 dargestellt, die aus Sitzbaugruppen 16 gebildet ist.

Die Passagierkabine 10 hat gekrümmte Seitenwände 18 - hier mit Fenstern 20 und einem Seitenwand-Stauraum 22, der in einer sich längs der Seitenwand 18 unterhalb der Fenster 20 erstreckenden Seitenwand-Stauraumbegrenzung 24 untergebracht ist.

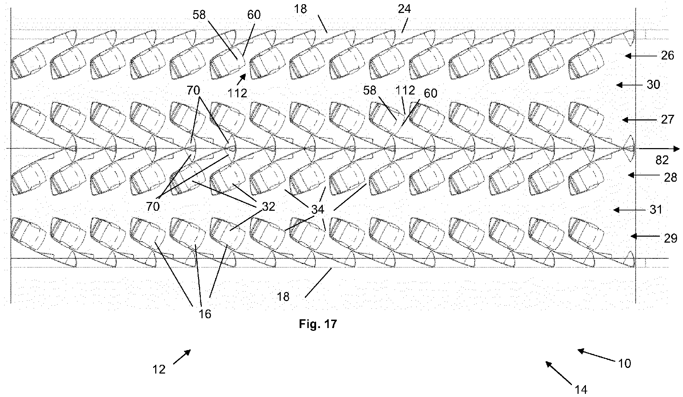

Die Sitzanordnung 14 hat in dem dargestellten Beispiel vier Sitzreihen, wie dies insbesondere in Fig. 17 dargestellt ist, nämlich eine linke Außenreihe 26 (Fensterreihe), eine linke Mittelreihe 27, eine rechte Mittelreihe 28 sowie eine rechte Außenreihe 29 (Fensterreihe). Zwischen den jeweiligen Außenreihen 26, 29 und Mittelreihen 27, 28 ist jeweils ein Gang 30, 31 gebildet.

Gezeigt ist ein Business-Class-Bereich der Passagierkabine 10 mit für Langstrecken gedachten Business-Class-Sitzen. Zum Bilden der einzelnen Sitzplätze 32 sind die Sitzbaugruppen 16 vorgesehen, die derart ausgebildet sind, dass zu jedem Sitzplatz 32 ein eigener Zugang 34 von dem nächstliegenden Gang 30, 31 vorgesehen ist.

Im Folgenden wird der Aufbau der jeweiligen Sitzbaugruppen 16 näher beschrieben.

Die Sitzbaugruppe 16 weist einen Sitzaufbau 36 zum Bilden des eigentlichen Sitzplatzes 32 und eine Passagierraumabtrennung 38 zum räumlichen Abtrennen des Passagierraums 40 zur persönlichen Nutzung des jeweiligen den Sitzplatz 32 nutzenden Passagiers auf.

Der Sitzaufbau 36 weist eine Sitzlehne 42, an der eine Rückenlehnenfläche 44 ausgebildet ist, und ein Sitzkissenelement 46, dessen obere Seite eine Sitzfläche 48 bildet, auf.

In den jeweils dargestellten Ausführungsformen weist der Sitzaufbau 36 weiter noch ein Beinauflageelement 50 auf, auf dem eine Beinauflagefläche 52 ausgebildet ist.

Bei den dargestellten Ausführungsformen ist weiter an der Sitzlehne 42 eine Kopfstütze 54 angebracht; ferner sind Armlehnen 56 vorgesehen.

Der Sitzaufbau 36 kann in wenigstens drei Positionen verstellt werden, nämlich eine Zugangsposition 58, eine Komfortposition 60 und eine Liegeposition 62.

Zur Verstellung aus der Komfortposition 60 in die Zugangsposition 48 wird das Sitzkissenelement 46 mit seinem rückwärtigen Teil unter die Sitzlehne 42 verschoben. Hierdurch ist die nutzbare Sitzfläche 48 variabel. In der Komfortposition 60 wird eine um ca. 3" bis 10" tiefere Sitzfläche 48 als in der Zugangsposition 58 zur Verfügung gestellt.

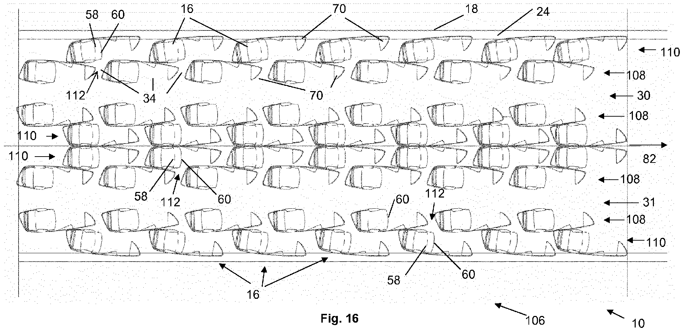

In den Fig. 16 und 17 sind die Sitzaufbauten 36 in Komfortposition 60 dargestellt, während die Zugangsposition 58 gestrichelt dargestellt ist. Wie ersichtlich, ermöglicht die Zugangsposition 58 einen bequemen Zugang sogar bei einem engen, durch benachbarte Sitzaufbauten 36 begrenzten Zugangsweg 112.

Im Folgenden wird wiederum auf die Fig. 1 bis 5 und 17 Bezug genommen, um den Aufbau und die Funktion der Sitzbaugruppen weiter zu erläutern.

In der Liegeposition 62 ist das Sitzkissenelement 46 noch weiter nach vorne geschoben; die Beinauflage 50 ist hochgeklappt und die Sitzlehne 42 in den durch das Wegschieben des Sitzkissenelements 46 zur Verfügung gestellten Raum unterhalb der sich in Zugangsposition 58 befindlichen Sitzlehne 42 hinein heruntergeklappt, so dass innerhalb des durch die Passagierraumabtrennung 38 abgetrennten Passagierraums 40 eine flache Liegefläche 64 mit einer diagonal gemessenen Länge von ca. 195 cm ausgebildet ist.

Die Passagierraumabtrennung 38 umgibt den Sitzaufbau 36 an dessen Rückseite 66 sowie an einem Seitenbereich 68 und an einem vorderen, einen Fußendbereich 70 bei der Liegeposition bildenden Vorderende 72 vollständig und lässt an dem anderen Seitenbereich 74 einen breiten Zugang 76 frei.

Wie insbesondere aus den Fig. 1 bis 5 ersichtlich, überlappt das Vorderende 72 der Sitzbaugruppen 16 an den Außenreihen 26, 29 den Seitenwand-Stauraum 22, wobei auf der Seitenwand-Stauraumbegrenzung 24 aufliegend ein Fußauflageelement 78 mit einer Fußauflagefläche 80 vorgesehen ist. Ein in die Umrisskontur der Passagierraumabtrennung 38 hineinragender Bereich der Seitenwand-Stauraumbegrenzung 24 wird bei in die Liegeposition 62 verfahrenem Sitzaufbau 36 als Unterlage für das Beinauflageelement 50 verwendet.

Wie insbesondere aus Fig. 17 ersichtlich, sind die Sitzbaugruppen 16 in den Außenreihen 26, 29 gegenüber der Längsrichtung 82 (= Flugrichtung) der Passagierkabine 10 mit ihren Vorderenden 72 hin zu den Seitenwänden 18 hin um einen Winkel von 10° bis 40°, insbesondere ca. 28,4°, geneigt angeordnet.

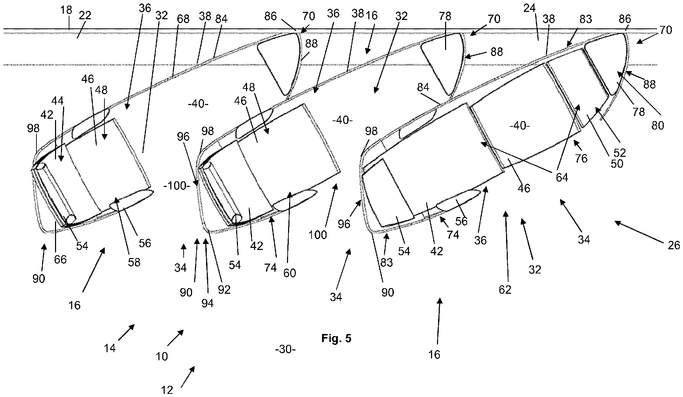

Die aus den Fig. 5 bis 8, 16 und 17 ersichtliche Umrisskontur 83 der die Passagierraumabtrennung 38 bildenden Sitzverkleidung weist etwa eine tropfenformartige Parallelogrammform auf.

Der Seitenbereich 68 ohne Zugang (Grundlinie der Parallelogrammform) ist in Draufsicht gesehen etwa geradlinig ausgebildet und endet am Vorderende 72 in einem vorderen Vorsprung 86, der gegenüber der Längsmittelebene durch die Sitzbaugruppe 16 zur Seite ohne Zugang hin versetzt angeordnet ist.

Von diesem vorderen Vorsprung 86 aus erstreckt sich die Sitzverkleidung 84 in ihrer Umrisskontur mit einer Abschrägung oder einer bogenförmigen Abrundung 88 nach hinten zu dem breiten Zugang 76 hin.

Hierdurch ist der Fußendbereich 70 schmaler ausgeführt als ein den Sitzaufbau 36 in der Zugangsposition 58 und der Komfortposition 60 umfassender Rückendbereich 90.

Am Rückendbereich 90 erstreckt sich die Sitzverkleidung 84 zunächst von dem bis zu den Armlehnen 56 sich erstreckenden breiten Zugang 76 aus in einer Abschrägung oder Verjüngung hin im Wesentlichen nach hinten bis zu einem nach hinten weisenden Vorsprung, der das rückwärtige Ende 94 der Sitzbaugruppe 16 bildet. Dieser Vorsprung 92 ist ebenfalls gegenüber der Längsmittelebene durch die Sitzbaugruppe 16 zur Seite hin versetzt angeordnet, jedoch hin zu dem Seitenbereich 74 mit Zugang. Von dem hinteren Vorsprung 92 aus erstreckt sich die Sitzverkleidung 84 um die Sitzlehne 62 (in Zugangsposition 58 oder Komfortposition 60) herum mit einer nach vorne und hin zu dem Seitenbereich 68 ohne Zugang hin geneigten Abschrägung 96 oder Abrundung, die an einem Eckbereich wiederum in die sich im Wesentlichen in Vorderrichtung erstreckenden Seitenbereich 68 ohne Zugang mündet.

Wie aus den Fig. 1 bis 5 und 17 ersichtlich, erstrecken sich jeweils vorne angeordnete Sitzbaugruppen mit diesem Eckbereich 98 und dem rückwärtigen Bereich des Seitenbereichs 68 ohne Zugang in den breiten Zugang 76 des Seitenbereichs 74 der jeweils benachbarten hinteren Sitzbaugruppe 16, wobei der breitere Zugang 76 der jeweiligen Sitzbaugruppe 16 durch die vordere Sitzbaugruppe 16 zu einem engen Zugang 100 eingeengt wird, der durch das rückwärtige Ende des breiteren Zugangs 76 einerseits und die hintere Abschrägung 96 der jeweils vorne angeordneten Sitzbaugruppe 16 begrenzt wird.

Bei in die Zugangsposition 48 befindlichem Sitzaufbau 36 wird dieser engere Zugang 100 in voller Breite nutzbar, da das Sitzkissenelement 46 aus dem Weg des engeren Zugangs 100 gefahren ist (siehe z.B. Fig. 1). Ist der Sitzaufbau 36 in der Komfortposition 60, dann ragt das Sitzkissenelement 46 weit in den engen Zugang 100 hinein. Der enge Zugang 100 kann auch vollständig durch das sich in Komfortposition befindliche Sitzkissenelement 46 versperrt werden, da ein Passagier zum Eintreten in den Passagierraum 40 und Heraustreten aus dem Passagierraum den Sitzaufbau 36 in die Zugangsposition 58 verstellen kann.

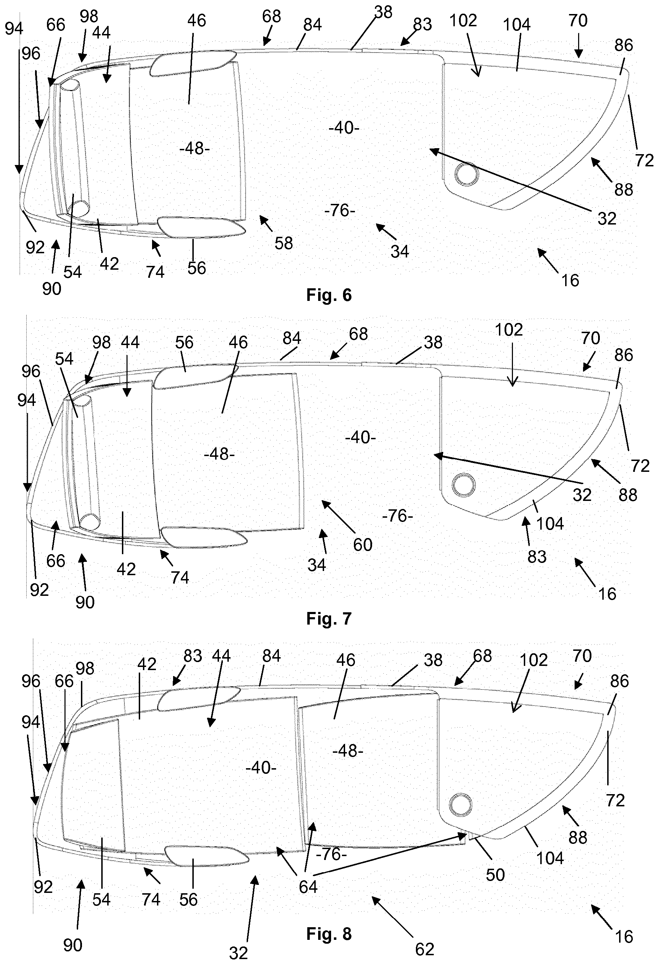

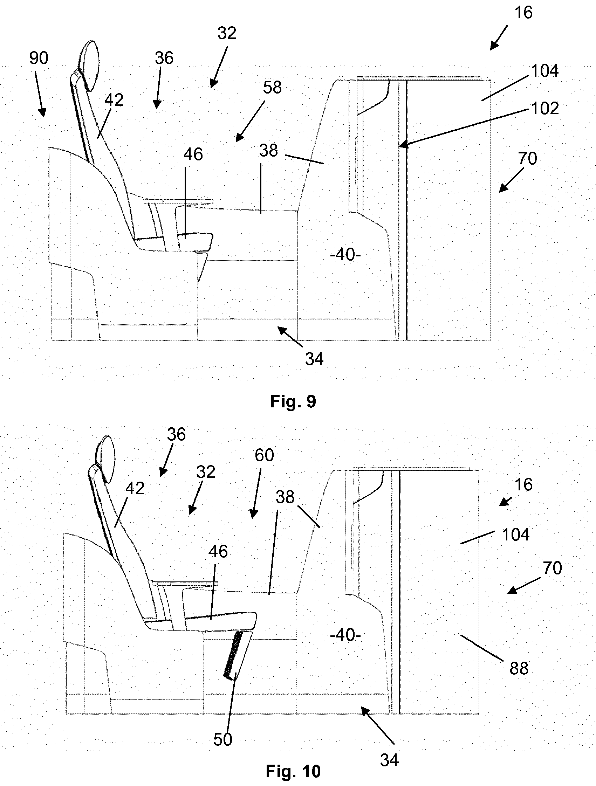

In den Fig. 6 bis 12 ist noch eine zweite Ausführungsform der Sitzbaugruppe dargestellt, die bis auf die Ausbildung des Fußendbereiches 70 der ersten bisher erläuterten Ausführungsform entspricht.

Wie in den Fig. 6 bis 12 dargestellt, ist im Fußendbereich innerhalb der Sitzverkleidung 34 ein eigener Stauraum 102 ausgebildet. Ein Fußauflageelement 78 mit der Fußauflagefläche 80 befindet sich unter einer in dem Fußendbereich 70 ausgebildeten Stauraumbegrenzung 104. Ansonsten entspricht die zweite Ausführungsform des Sitzaufbaus der zuvor erläuterten ersten Ausführungsform des Sitzaufbaus 16.

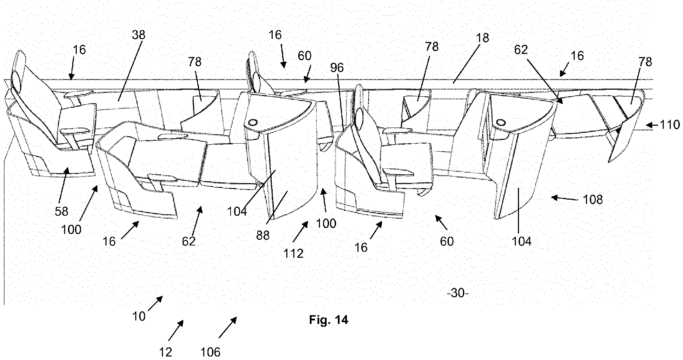

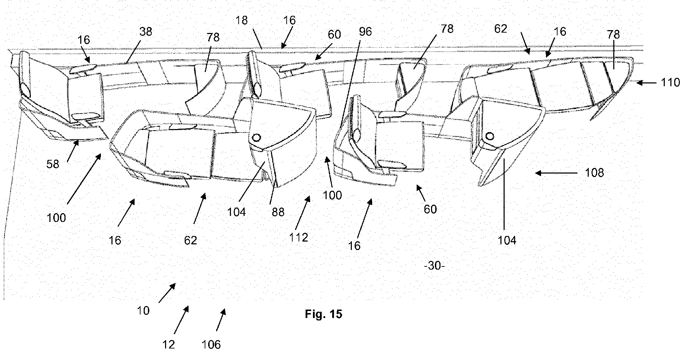

In den Fig. 13 bis 16 ist eine zweite Ausführungsform einer Sitzanordnung 106 dargestellt, wobei in der dargestellten Ausführungsform der Fig. 16 insgesamt acht Reihen von Sitzbaugruppen 16 nebeneinander angeordnet sind, wobei in benachbarten Sitzreihen die einzelnen Sitzbaugruppen in Längsrichtung versetzt zueinander angeordnet sind.

Es sind hier ebenfalls die beiden Gänge 30, 31 ausgebildet, wobei neben den Gängen 30, 31 jeweils eine nahe zu dem Gang ausgebildete Sitzreihe 108 und weiter entfernt zu dem jeweiligen Gang 30, 31 eine entfernt zu dem Gang ausgebildete Sitzreihe 110 vorgesehen ist. Die entfernt zu dem Gang ausgebildete Sitzreihe 110 kann beispielsweise eine Außenreihe oder Fensterreihe sein, auch können im Mittelbereich eine oder zwei Mittelreihen vorgesehen sein.

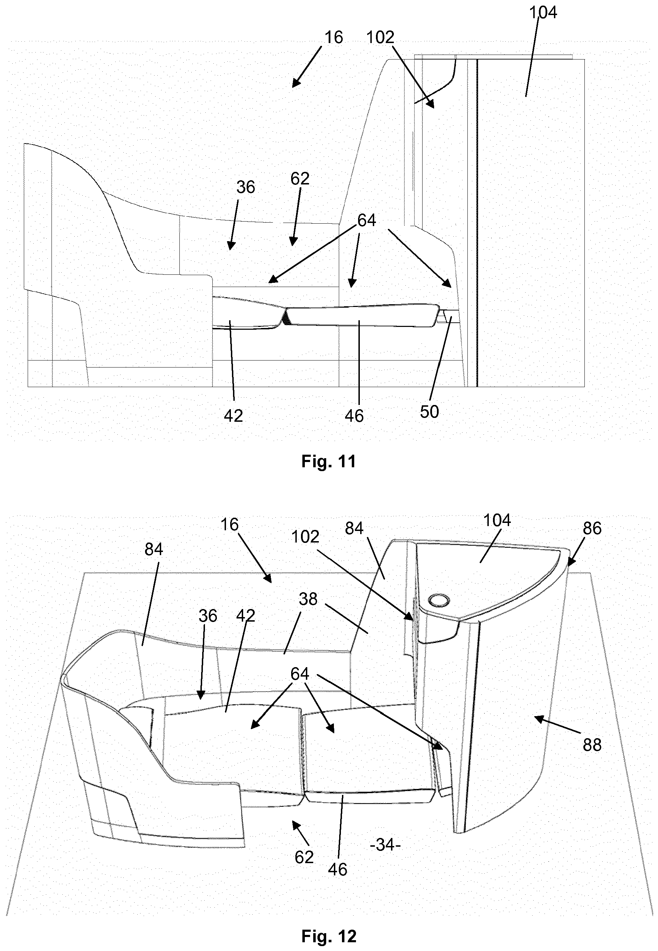

Bei der dargestellten Ausführungsform der Sitzanordnung 106 sind die Sitzbaugruppen 16 der entfernt zu dem Gang ausgebildeten Sitzreihen 110 gemäß der ersten Ausführungsform ausgebildet, während die Sitzbaugruppen 16 in den nahe zu dem Gang ausgebildeten Sitzreihen 108 gemäß der zweiten Ausführungsform ausgebildet ist, wie sie z.B. in Fig. 12 dargestellt ist.

Wie am besten aus Fig. 16 ersichtlich, sind Sitzbaugruppen 16 der Fensterreihen um ca. 5° bis 10° mit dem Fußendbereich 70 zur jeweiligen Seitenwand 18 hin geneigt angeordnet. Die sich zwischen der Seitenwand 18 und dem jeweiligen Gang 30, 31 befindlichen Sitzbaugruppen 16 in den nahe zu dem Gang ausgebildeten Sitzreihen 108 sind mit ihren rückwärtigen Enden 94 hin zu dem jeweiligen breiten Zugang 76 der benachbarten Sitzbaugruppe 16 hin gegenüber der Längsrichtung 82 der Passagierkabine 10 (entspricht der Flugrichtung) um einen kleineren Winkel, z.B. 2° bis 5°) geneigt. Die Sitzbaugruppen 16 zumindest der nahe zu dem Gang ausgebildeten Sitzreihe 108 sind hintereinander derart angeordnet, dass zwischen der Rückseite der jeweils vorne angeordneten Sitzbaugruppe und der Vorderseite der jeweils hinten angeordneten Sitzbaugruppe ein Zugangsweg 112 zu dem jeweils benachbarten Sitzplatz der entfernt zu dem Gang ausgebildeten Sitzreihe 110 ausgebildet ist. Dieser Zugangsweg 112 wird durch die hintere Abschrägung 96 der vorderen Sitzbaugruppe 16 und die vordere Abrundung 88 der hinteren Sitzbaugruppe 16 begrenzt.

Auch hier wird durch ein Verfahren des Sitzkissenelements 46 aus der Komfortposition 60 in die Zugangsposition 46 der Zugangsweg 112 für den Passagier frei gemacht.

Durch die Sitzanordnungen 14, 106 lässt sich der Raum in der Passagierkabine 10 besser ausnützen, so dass insgesamt mehr Business-Class-Sitzplätze 32 ohne Komforteinbußen für die jeweiligen Passagiere erhältlich sind.

Bei den jeweils dargestellten schrägen Anordnungen der Sitzbaugruppen 60 kann vorgesehen sein, dass sich die Sitzaufbauten 36 innerhalb des Passagierraums 40 - z.B. zum Starten und Landen - in Flugrichtung, d.h. in Längsrichtung 82, weisend ausrichten lassen. Dies gilt insbesondere bei in die Zugangsposition 58 verfahrenen Sitzaufbauten 36.

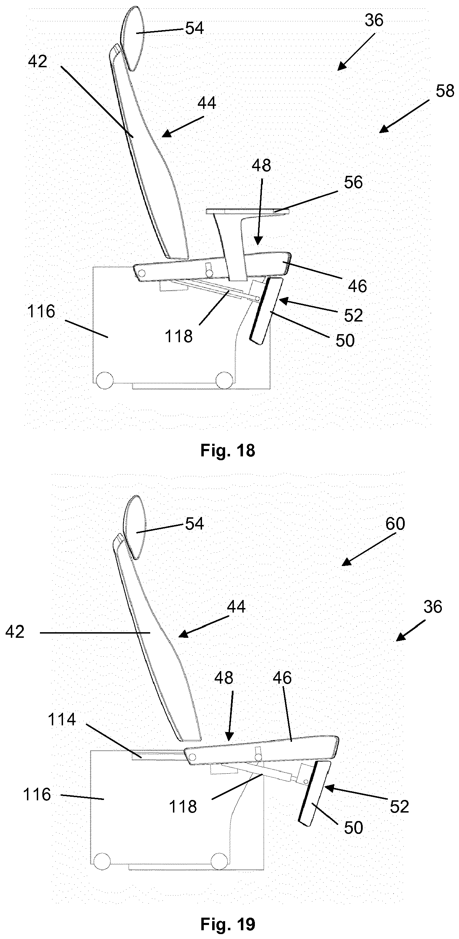

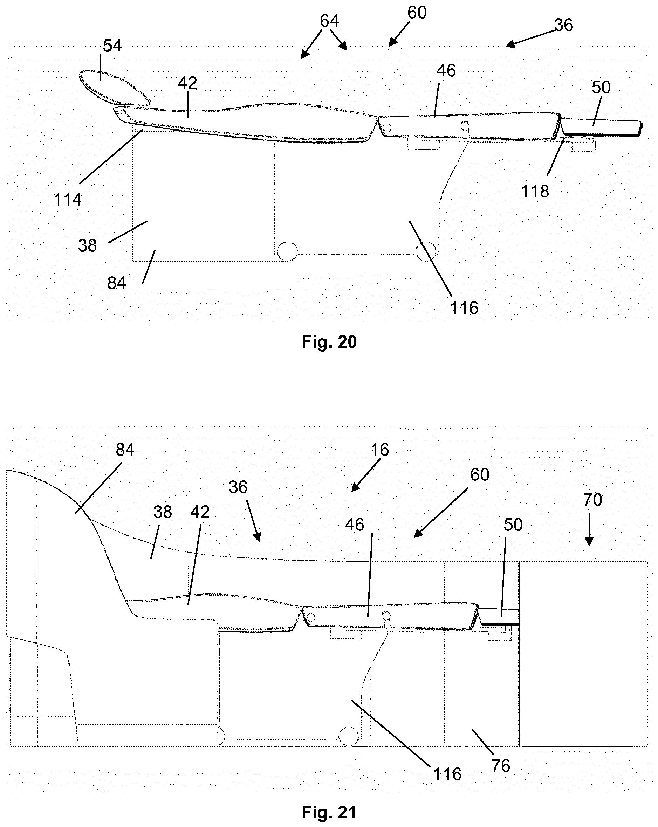

Im Folgenden wird noch anhand der Fig. 18 bis 21 eine mögliche Mechanik für die Verstellung des Sitzaufbaus 36 erläutert.

Wie aus den Fig. 18 bis 21 ersichtlich, kann das Sitzkissenelement 46 in einer Längsschiene 114 zum Verschieben zwischen der Zugangsposition 58 und der Komfortposition 60 verschiebbar angelenkt sein. Die Längsschiene 114 kann in der Sitzverkleidung 84 der Passagierraumabtrennung 38 untergebracht sein.

Zusätzlich kann ein Rollwagen 116 nach vorne und nach hinten verschiebbar angeordnet sein, der im Verlauf des Verfahrens des Sitzaufbaus 36 von der Komfortposition 60 in die Liegeposition 62 nach vorne verfahren werden kann, um die Sitzlehne 42 und/oder das Sitzkissenelement 46 und/oder das Beinauflageelement 50 in der Liegeposition 62 zu stützen.

Auch andere Mechaniken anstelle eines Rollwagens 160 sind denkbar.

### Bezugszeichenliste:

- 10: Passagierkabine
- 12: Flugzeug
- 14: Sitzanordnung (Fischgrät-Layout)
- 16: Sitzbaugruppe
- 18: Seitenwand
- 20: Fenster
- 22: Seitenwand-Stauraum
- 24: Seitenwand-Stauraumbegrenzung
- 26: linke Außenreihe
- 27: linke Mittelreihe
- 28: rechte Mittelreihe
- 29: rechte Außenreihe
- 30: linker Gang
- 31: rechter Gang
- 32: Sitzplatz
- 34: Zugang
- 36: Sitzaufbau
- 38: Passagierraumabtrennung
- 40: Passagierraum
- 42: Sitzlehne
- 44: Rückenlehnenfläche
- 46: Sitzkissenelement
- 48: Sitzfläche
- 50: Beinauflageelement
- 52: Beinauflagefläche
- 54: Kopfstütze
- 56: Armlehne
- 58: Zugangsposition
- 60: Komfortposition
- 62: Liegeposition
- 64: Liegefläche
- 66: Rückseite
- 68: Seitenbereich (ohne Zugang)
- 70: Fußendbereich
- 72: Vorderende
- 74: Seitenbereich (mit Zugang)
- 76: breiter Zugang
- 78: Fußauflageelement
- 80: Fußauflagefläche
- 82: Längsrichtung
- 84: Sitzverkleidung
- 86: vorderer Vorsprung
- 88: Abrundung
- 90: Rückendbereich
- 92: hinterer Vorsprung
- 94: rückwärtiges Ende
- 96: hintere Abschrägung
- 98: Eckbereich
- 100: engen Zugang
- 102: Stauraum
- 104: Stauraumbegrenzung (Fußendbereich)
- 106: Sitzanordnung (Standard-Layout)
- 108: nahe zu dem Gang ausgebildete Sitzreihe (Gangreihe)
- 110: entfernt zu dem Gang ausgebildete Sitzreihe (z.B. Fensterreihe oder Mittelreihe)
- 112: Zugangsweg
- 114: Längsschiene
- 116: Rollwagen

## Patentansprüche

1. Sitzbaugruppe (16) zum Bilden wenigstens eines Sitzplatzes (32) einer Sitzanordnung (14) für eine Passagierkabine (10) eines Luftfahrzeuges, mit wenigstens einem Sitzaufbau (36), der eine Sitzlehne (42) zum Bilden einer Rückenlehnenfläche (44) und ein Sitzkissenelement (46) zum Bilden einer Sitzfläche (48) aufweist, und einer Passagierraumabtrennung (38) zum räumlichen Abtrennen eines Passagierraums (40) des Sitzplatzes (32), welche den Sitzaufbau (36) zumindest teilweise umgibt und einen Zugang (34) zu dem Sitzaufbau (36) freilässt, **dadurch gekennzeichnet,**
**dass** das Sitzkissenelement (46) zwischen einer Komfortposition (60), in der das Sitzkissenelement (46) zum Bereitstellen einer größeren Sitzfläche (48) weiter in den Zugang (34) hineinragt und einer Zugangsposition (58), in der das Sitzkissenelement (46) zum Ermöglichen eines breiteren Zugangs (34) weniger weit oder gar nicht in den Zugang (34) hineinragt, bewegbar ist, wobei das Sitzkissenelement (46) derart bewegbar ausgebildet ist, dass es eine in der Sitzflächentiefe variable Sitzfläche (48) zur Verfügung stellt, wobei das Sitzkissenelement (46) zwischen der Komfortposition (60) und der Zugangsposition (58) in der horizontalen Richtung gesehen oder projiziert um ca. 7 cm bis ca. 26 cm bewegbar ist, um in der Komfortstellung eine um ca. 7 cm bis ca. 26 cm tiefere Sitzfläche (48) als in der Zugangsposition (58) zur Verfügung zu stellen.

2. Sitzbaugruppe (16) nach Anspruch 1,
**dadurch gekennzeichnet,**
**dass** das Sitzkissenelement (46) zur Bewegung von der Komfortposition (60) in die Zugangsposition (58) horizontal unter die Sitzlehne (42) verschiebbar ist.

3. Sitzbaugruppe (16) nach einem der voranstehenden Ansprüche, **gekennzeichnet durch** wenigstens eines der folgenden Merkmale
3.1 dass der Sitzaufbau (36) ein Fuß- (78) und/oder Beinauflageelement (50) mit einer Fuß- (80) und/oder Beinablagefläche (52) aufweist, das zwischen einer Benutzungsposition und einer Zugangsposition (58) bewegbar ist;
3.2 dass das Fuß- (78) und/oder Beinauflageelement (50) relativ zu dem Sitzkissenelement (46) derart klappbar ist, dass die Fuß- (80) und/oder Beinablagefläche (52) in der Benutzungsposition oder Liegeposition (62) eine Verlängerung der Sitzfläche (48) bildet;
3.3 dass die Sitzlehne (42) zwischen einer aufrechten Position und einer Liegeposition (62) bewegbar ist,
3.4 dass in einer Liegeposition (62) die Rückenlehnenfläche (44) und die Sitzfläche (48) bei in die Liegeposition (62) verfahrenem Sitzaufbau (36) gemeinsam zumindest einen Teil einer im Wesentlichen horizontalen Liegefläche (64) bilden,
3.5 dass die Sitzlehne (42) in einer Liegeposition (62) in einen Raum eingreift, welcher in **durch** das Sitzkissenelement (46) in der Zugangsposition (58) belegt wird und/oder
3.6 dass der Sitzaufbau (36) in eine Liegeposition (62) bewegbar ist, in der die Rückenlehnenfläche (44), die Sitzfläche (48) und eine an einem Fuß- und/oder Beinauflageelement (50) ausgebildete Fuß- und/oder Beinablage- fläche (52) eine im Wesentlichen flache oder ebene Liegefläche (64) bilden und/oder
3.7 dass das Fuß- und/oder Beinauflageelement (50) in der Liegeposition (62) auf einer Stauraumbegrenzung (104) aufliegt, und/oder
3.8 dass die Passagierraumabtrennung (38) einen Stauraum (102) mit einer Stauraumbegrenzung (104) aufweist, die in der Liegeposition (62) zur Unterstützung einer Fuß- und/oder Beinauflagefläche (50) nutzbar ist und/oder
3.9 dass die Sitzbaugruppe (16) in der Liegeposition (62) eine Liegefläche (64) schafft, die in wenigstens einer Richtung eine Länge von mindestens 180 cm bis 200 cm, vorzugsweise ca. 195 cm aufweist und/oder
3.10 dass die Passagierraumabtrennung (38) einen Ausschnitt und/oder eine Ausbuchtung zum Ermöglichen einer Verschiebung des Sitzkissenelements (46) in die Liegeposition (62) aufweist.

4. Sitzbaugruppe (16) nach einem der voranstehenden Ansprüche, **gekennzeichnet durch** wenigstens eines der folgenden Merkmale:
4.1 dass die Sitzbaugruppe (16) in Draufsicht eine tropfenförmige Umrisskontur mit einem schmaleren Fußendbereich (70) und einem breiteren, den Sitzaufbau (36) in der Zugangs- (58) oder Komfortposition (60) umfassenden breiteren Rückenendbereich (90) hat,
4.2 dass die Sitzbaugruppe (16) eine hinsichtlich einer Längsmittelebene unsymmetrische Umrisskontur aufweist,
4.3 dass die Passagierraumabtrennung (38) am Fußendbereich (70) in Draufsicht einen vorderen Vorsprung (86) aufweist, der das Vorderende (72) der Passagierraumabtrennung (38) bildet und der hinsichtlich einer Längsmittelebene zu einer Seite hin versetzt angeordnet ist,
4.4 dass der vordere Vorsprung hinsichtlich der Längsmittelebene zu einer keinen Zugang (34) aufweisenden Seite hin versetzt angeordnet ist,
4.5 dass die Passagierraumabtrennung (38) zwischen dem Vorderende (72) und dem Zugang (34) in Draufsicht gesehen eine Abschrägung und/oder eine bogenförmige Abrundung (88) aufweist,
4.6 dass die Passagierraumabtrennung (38) am Rückenendbereich (90) in Draufsicht einen Vorsprung (92) aufweist, der das rückwärtige Ende (94) der Passagierraumabtrennung (38) bildet und der hinsichtlich einer Längsmittelebene zu einer Seite hin versetzt angeordnet ist,
4.7 dass das rückwärtige Ende (94) zu einer einen Zugang (34) aufweisenden Seite hin versetzt angeordnet ist, und/oder
4.8 dass die Passagierraumabtrennung (38) von dem rückwärtigen Ende (94) zur Mitte und zu einer keinen Zugang (34) aufweisenden Seite hin eine sich nach vorne erstreckende Abschrägung (96) und/oder eine sich nach vorne erstreckende bogenförmige Abrundung (88) aufweist, und/oder
4.9 dass in einem Fußendbereich (70) ein Staufach oder Staubehälter zum Schaffen eines **durch** den die Sitzbaugruppe (16) benutzenden Passagier persönlich nutzbaren Stauraums (102) untergebracht sind.

5. Sitzanordnung (14) für eine Passagierkabine (10) eines Luftfahrzeuges, **gekennzeichnet durch** mehrere Sitzbaugruppen (16) nach einem der voranstehenden Ansprüche.

6. Sitzanordnung (14) nach Anspruch 5,
**dadurch gekennzeichnet,**
**dass** ein Zugangsweg (112) zu dem Zugang (34) bei zumindest einigen der Sitzbaugruppen (16) an einem Vorderende (72) und/oder einem rückwärtigen Ende (94) einer jeweils benachbarten Sitzbaugruppe (16) vorbei führt und/oder davon eingegrenzt ist.

7. Sitzanordnung (14) nach Anspruch 5 oder 6,
**dadurch gekennzeichnet,**
**dass** Reihen seitlich benachbarter Sitzbaugruppen (16) derart versetzt zueinander angeordnet sind, dass zwischen einem Vorderende (72) einer in einer Reihe nachfolgenden Sitzbaugruppe (16) und einem rückwärtigen Ende (94) einer in der Reihe davor stehenden Sitzbaugruppe (16) ein zu dem Zugang (34) einer seitlich benachbarten Sitzbaugruppe (16) mündender Zugangsabstand ausgebildet ist, um auch zu dem Sitzplatz (32) der seitlich benachbarten Sitzbaugruppe (16) einen eigenen Zugangsweg (34) von einem Längsgang aus zu schaffen.

8. Sitzanordnung (14) nach einem der Ansprüche 5 bis 7,
**dadurch gekennzeichnet,**
**dass** ein Raum zwischen wenigstens zwei Sitzbaugruppen (16) als Stauraum (102) ausgebildet ist.

9. Sitzanordnung (14) nach einem der Ansprüche 5 bis 8,
**gekennzeichnet durch** wenigstens eines der folgenden Merkmale:
9.1 dass Sitzbaugruppen (16) von seitlichen Außenreihen (26, 29) mit ihren Fußendbereichen (70) zur Außenseite hin geneigt angeordnet sind,
9.2 dass Sitzbaugruppen (16) einer ersten und einer zweiten benachbarten Mittelreihe (27, 28) jeweils zu der anderen der ersten und der zweiten Mittelreihe (27, 28) hin geneigt sind,
9.3 dass sich Fußendbereiche (70) von benachbarten Sitzbaugruppen (16) in Draufsicht gesehen überlappen, und/oder
9.4 dass wenigstens ein Rückenendbereich (90) einer ersten Sitzbaugruppe (16) in einen Zugang (34) einer Passagierraumabtrennung (38) einer benachbarten zweiten Sitzbaugruppe (16) in Draufsicht die Umrisskontur derselbe überlappend hineinragt.

10. Passagierkabine (10) eines Luftfahrzeuges, **gekennzeichnet durch** wenigstens eine Sitzanordnung (14) nach einem der Ansprüche 5 bis 9 und/oder wenigstens einer oder mehrerer der Sitzbaugruppen (16) nach einem der Ansprüche 1 bis 4.

## Claims

1. A seat assembly (16) for forming at least one seat (32) of a seat arrangement (14) for a passenger cabin (10) of an aircraft with at least one seat structure (36) which has a seat backrest (42) for forming a backrest surface (44) and a seat cushion element (46) for forming a seat surface (48) and a passenger space partition (38), which is arranged to spatially partition a passenger space (40) of the seat (32) and which at least partially surrounds the seat structure (36) and leaves open an access (34) to the seat structure (36) **characterized in that** the seat cushion element (46) is moveable between a comfort position (60) in which the seat cushion element (46) projects further into the access (34) to provide a larger seat surface (48) and an access position (58) in which the seat cushion element (46) does not project as far or does not project at all into the access (34) to provide a wider access (34) wherein the seat cushion element (46) is configured in such a movable way that it provides a variable seat surface (48) in the depth of the seat surface wherein the seat cushion element (46) is moveable by about 7 cm to about 26 cm between the comfort position (60) and the access position (58) seen or projected in the horizontal direction, to provide a seat surface (48) which is lower by about 7 cm to about 26 cm in the comfort position than in the access position (58).

2. The seat assembly (16) according to claim 1, **characterized in that** the seat cushion element (46) is moveable horizontally under the seat backrest (42) in order to move from the comfort position (60) into the access position (58).

3. The seat assembly (16) according to one of the preceding claims **characterized by** at least one of the following features wherein:
3.1 the seat structure (36) has a foot (78) and/or leg support element (50) which has a foot (80) and/or leg rest surface (52) which is movable between a position of use and an access position (58);
3.2 the foot (78) and/or leg support element (50) is foldable relative to the seat cushion element (46) in such a way that the foot (80) and/or leg rest surface (52) forms an elongation of the seat surface (48) in the position of use or reclining position (62);
3.3 the seat backrest (42) is moveable between an upright position and a reclining position (62);
3.4 in a reclining position (62) the backrest surface (44) and the seat surface (48) together form at least one portion of an essentially horizontal reclining surface (64), when the seat structure (36) is in the reclining position (62);
3.5 in a reclining position (62) the seat backrest (42) extends into a space occupied by the seat cushion element (46) in the access position (58) and/or
3.6 the seat structure (36) is moveable into a reclining position (62), in which the backrest surface (44), the seat surface (48) and a foot and/or leg rest surface (52), which is formed at a foot and/or leg support element (50), form an essentially flat or planar reclining surface (64) and/or
3.7 in the reclining position (62) the foot and/or leg support element (50) rests on a storage space delimitation (104), and/or
3.8 the passenger space partition (38) has a storage space (102) with a storage space delimitation (104), which in the reclining position (62) is useable for supporting a foot and/or leg support surface (50) and/or
3.9 in the reclining position (62) the seat assembly (16) provides a reclining surface (64) having a length of at least 180 cm to 200 cm in at least one direction, preferably about 195 cm and/or
3.10 the passenger space partition (38) has a cutout and/or a bulge that allows movement of the seat cushion element (46) into the reclining position (62).

4. The seat assembly (16) according to one of the preceding claims **characterized by** at least one of the following features wherein:
4.1 in a plan view the seat assembly (16) has a tear-shaped outer contour with a narrower foot end region (70) and a wider rear end region (90), which surrounds the seat structure (36) in the access position (58) or comfort position (60),
4.2 the seat assembly (16) has an asymmetrical outer contour relative to a longitudinal center plane,
4.3 in a plan view the passenger space partition (38) has a front projection (86) at the foot end region (70), the front projection forming the front end (72) of the passenger space partition (38) and is arranged so as to be offset towards one side relative to a longitudinal center plane,
4.4 the front projection is arranged so as to be offset towards a side, having no access (34), relative to the longitudinal center plane,
4.5 between the front end (72) and the access (34) the passenger space partition (38) has, when seen in the plan view, a bevel and/or an archshaped shoulder (88),
4.6. on the rear end region (90) the passenger space partition (38) has, when viewed in the plan view, a projection (92) forming the rearward end (94) of the passenger space partition (38) and is arranged so as to be offset towards one side relative to a longitudinal center plane,
4.7 the rearward end (94) is arranged so as to be offset towards a side having an access (34) and/or,
4.8. the passenger space partition (38) has a forwards extending bevel (96) and/or a forwards extending arch-like shoulder (88) from the rearward end (94) to the center and to a side having no access (34) and/or,
4.9. a storage compartment or a storage container for providing a storage space (102), which can be used personally by the passenger using the seat assembly (16), is housed in a foot end region (70).

5. A seat arrangement (14) for a passenger cabin (10) of an aircraft **characterized by** a plurality of seat assemblies (16) according to one of the preceding claims.

6. The seat arrangement (14) according to claim 5 **characterized in that** at least some of the seat assemblies (16) have an access path (112) to the access (34) leading past a front end (72) and/or a rearward end (94) of a respective adjacent seat assembly (16) and/or is defined by the front end or rearward end.

7. The seat arrangement (14) according to claim 5 or 6 **characterized in that** the rows of laterally adjacent seat assemblies (16) are arranged so as to be offset from each other in such a way that an access spacing distance which opens out into the access (34) of a laterally adjacent seat assembly (16), is formed between a front end (72) of a seat assembly (16), following in a row, and a rearward end (94) of a seat assembly (16), located in the row in front of the former row, to provide an access path (34) from a longitudinal aisle to the seat (32) of the laterally adjacent seat assembly (16).

8. The seat arrangement (14) according to one of the claims 5 to 7 **characterized in that** a space is formed between at least two seat assemblies (16) as a storage space (102).

9. The seat arrangement (14) according to one of the claims 5 to 8 **characterized by** at least one of the following features wherein:
9.1 the seat assemblies (16) of the lateral outer rows (26, 29) are arranged so as to be tilted with the foot end regions (70) of the seat assemblies towards the outside,
9.2 the seat assemblies (16) of a first and a second adjacent center row (27, 28) are tilted in each case towards the other of the first and the second center row (27, 28),
9.3 the foot end regions (70) of the adjacent seat assemblies (16) overlap, when seen in the plan view, and/or
9.4 at least one rear end region (90) of a first seat assembly (16) projects, when seen in the plan view, into the access (34) of a passenger space partition (38) of an adjacent second seat assembly (16) so as to overlap the outer contour of the adjacent second seat assembly (16).

10. A passenger cabin (10) of an aircraft **characterized in that** at least one seat arrangement (14) according to one of the claims 5 to 9 and/or at least one or a plurality of the seat assemblies (16) according to one of the claims 1 to 4.

## Revendications

1. Groupe structurel formant siège (16) pour former au moins une place assise (32) d'un agencement de siège (14) pour une cabine de passager (10) d'un aéronef, comprenant au moins une superstructure de siège (36) qui comprend un dossier de siège (42) pour former une surface d'appui dorsale (44) et un élément formant coussin de siège (46) pour former une surface d'assise (48), et un séparateur d'espace passager (38) pour séparer dans l'espace un espace passager (40) de la place assise (32), qui entoure au moins partiellement la superstructure de siège (36) et qui dégage un accès (34) vers la superstructure de siège (36),
**caractérisé en ce que** l'élément formant coussin de siège (46) est déplaçable entre une position de confort (60) dans laquelle l'élément formant coussin de siège (46) pénètre plus loin à l'intérieur de l'accès (34) pour mettre à disposition une surface assise (48) plus grande, et une position d'accès (58) dans laquelle l'élément formant coussin de siège (46) se projette moins loin, voire pas du tout, dans l'accès (34) pour permettre un accès plus large (34), dans lequel l'élément formant coussin de siège (46) est réalisé déplaçable de telle façon qu'il met à disposition une surface assise (48) à profondeur variable, dans lequel l'élément formant coussin de siège (46) est déplaçable entre la position de confort (60) et la position d'accès (58), vu ou projeté dans la direction horizontale, d'environ 7 cm à environ 26 cm, afin de mettre à disposition dans la position de confort une surface assise (48) plus profonde d'environ 7 cm à environ 26 cm que dans la position d'accès (58).

2. Groupe structurel formant siège (16) selon la revendication 1, **caractérisé en ce que** l'élément formant coussin de siège (46) est susceptible d'être déplacé horizontalement en translation au-dessous du dossier de siège (42) pour le déplacement depuis la position de confort (60) jusque dans la position d'accès (58).

3. Groupe structurel formant siège (16) selon l'une des revendications précédentes,
**caractérisé par** l'une au moins des caractéristiques suivantes :
3.1 la superstructure de siège (36) comprend un élément repose-pied (78) et/ou un élément repose-jambe (50) avec une surface d'appui de pied (80) et/ou une surface d'appui de jambe (52), qui est déplaçable entre une position d'utilisation et une position d'accès (58) ;
3.2 l'élément repose-pied (78) et/ou l'élément repose-jambe (50) est susceptible d'être rabattu par rapport à l'élément formant coussin de siège (46) de telle façon que la surface d'appui de pied (80) et/ou la surface d'appui de jambe (52) forme, dans la position d'utilisation ou dans la position couchée (52), un prolongement de la surface d'assise (48) ;
3.3 le dossier de siège (42) est déplaçable entre une position dressée et une position couchée (62) ;
3.4 dans une position couchée (62), la surface d'appui dorsale (44) et la surface d'assise (48) forment, lorsque la superstructure de siège (36) est déplacée jusque dans la position couchée (62), conjointement une partie d'une surface de couchage sensiblement horizontale (64) ;
3.5 le dossier de siège (42) pénètre, dans une position couchée (62), dans un espace qui est occupé par l'élément formant coussin de siège (46) dans la position d'accès (58), et/ou
3.6 la superstructure de siège (36) est déplaçable jusque dans une position couchée (62) dans laquelle la surface d'appui dorsale (44), la surface d'assise (48) et une surface d'appui de pied et/ou une surface d'appui de jambe (52) ménagée sur l'élément repose-pied et/ou l'élément repose-jambe (50) forment une surface de couchage (64) sensiblement plate ou plane ; et/ou
3.7 l'élément repose-pied et/ou l'élément repose-jambe (50) est soutenu, dans la position de couchage (62), sur une délimitation (104) pour un espace de rangement, et/ou
3.8 la séparation pour espace passager (38) comporte un espace de rangement (102) avec une délimitation (104) pour espace de rangement qui est utilisable, dans la position couchée (62) pour soutenir une surface d'appui de pied et/ou une surface d'appui de jambe (50), et/ou 3.9 le groupe structurel formant siège (16) réalise, dans la position couchée (62), une surface de couchage (64) qui présente au moins dans une direction une longueur d'au moins 180 cm à 200 cm, de préférence environ 195 cm, et/ou
3.10 la séparation pour espace passager (38) comporte une découpe et/ou un creux pour permettre un déplacement de l'élément formant coussin de siège (46) jusque dans la position couchée (62).

4. Groupe structurel formant siège (16) selon l'une des revendications précédentes,
**caractérisé par** l'une au moins des caractéristiques suivantes :
4.1 le groupe structurel formant siège (16) présente en vue de dessus un contour extérieur en forme de goutte avec une zone terminale pour pied (70) plus étroite et une zone terminale dorsale (90) plus large, qui inclut la superstructure de siège (36) dans la position d'accès (58) ou la position de confort (60),
4.2 le groupe structurel formant siège (16) présente un contour extérieur asymétrique par rapport à un plan longitudinal médian,
4.3 la séparation pour espace passager (38) comporte, au niveau de la zone terminale pour pied (70), en vue de dessus une saillie antérieure (86), qui forme l'extrémité antérieure (72) de la séparation pour espace passager (38), et qui est agencée en décalage vers un côté par rapport à un plan longitudinal médian,
4.4 la saillie antérieure est agencée, par rapport au plan longitudinal médian, en décalage vers un côté qui ne présente aucun accès (34),
4.5 la séparation pour espace passager (38) comporte un biseau et/ou un arrondi en forme d'arc (88), vue en vue de dessus, entre l'extrémité antérieure (72) et l'accès (34),
4.6 la séparation pour espace passager (38) comporte, au niveau de la zone terminale dorsale (90), en vue de dessus, une saillie (92) qui forme l'extrémité postérieure (94) de la séparation pour espace passager (38), et qui est agencée en décalage vers un côté par rapport à un plan longitudinal médian.
4.7 l'extrémité postérieure (94) est agencée de façon décalée vers un côté comportant un accès (34), et/ou
4.8 la séparation pour espace passager (38) présente, depuis l'extrémité postérieure (94) vers le milieu et vers un côté qui ne comporte aucun accès (34), un biseau (96) s'étendant vers l'avant et/ou un arrondi en forme d'arc (88) qui s'étend vers l'avant, et/ou
4.9 dans une zone terminale pour pied (70) est logé un casier de rangement ou un récipient de rangement pour constituer un espace de rangement (102) utilisable personnellement par le passager qui utilise le groupe structurel formant siège.

5. Agencement de siège (14) pour une cabine passager (10) d'un aéronef,
**caractérisé par** plusieurs groupes structurels formant siège (16) selon l'une des revendications précédentes.

6. Agencement de siège (14) selon la revendication 5,
**caractérisé en ce qu'**un chemin d'accès (112) vers l'accès (34), au moins pour quelques-uns des groupes structurels formant siège (16) à une extrémité avant (72) et/ou à une extrémité arrière (94), passe le long d'un groupe structurel formant siège (16) respectif voisin, ou est limité par celui-ci.

7. Agencement de siège (14) selon la revendication 5 ou 6,
**caractérisé en ce que** des rangées de groupes structurels formant sièges latéralement voisins sont agencées les unes par rapport aux autres de façon décalée de telle sorte qu'un écartement d'accès qui débouche vers l'accès (34) d'un groupe structurel formant siège (16) latéralement voisin est formé entre une extrémité antérieure (72) d'un groupe structurel formant siège (16) successif dans une rangée et une extrémité postérieure (34) d'un groupe structurel formant siège (16) latéralement voisin, afin de réaliser, également vers la place assise (32) du groupe structurel formant siège (16) latéralement voisin, un propre chemin d'accès (34) depuis une allée longitudinale.

8. Agencement de siège (14) selon l'une des revendications 5 à 7,
**caractérisé en ce qu'**un espace entre au moins deux groupes structurels formant sièges (16) est réalisé sous forme de compartiment de rangement (102).

9. Agencement de siège (14) selon l'une des revendications 5 à 8,
**caractérisé par** l'une au moins des caractéristiques suivantes :
9.1 des groupes structurels formant siège (16) de rangées extérieures latérales (26, 29) sont agencés avec leurs zones terminales pour pied (70) de façon inclinée vers le côté extérieur ;
9.2 des groupes structurels formant siège (16) d'une première et d'une seconde rangée médiane voisines (27, 28) sont inclinées respectivement vers l'autre de ladite première et ladite seconde rangée médiane (27, 28), 9.3 les zones d'extrémité pour pied (70) de groupes structurels formant sièges (16) voisins, se chevauchent lorsqu'on les voit en vue de dessus, et/ou
9.4 au moins une zone d'extrémité dorsale (90) d'un premier groupe structurel formant siège (16) dépasse dans un accès (34) d'une séparation pour espace passager (38) d'un second groupe structurel formant siège (16) voisin, de manière à chevaucher en vue de dessus le contour extérieur de ce dernier.

10. Cabine passager (10) d'un aéronef, **caractérisée par** au moins un agencement de siège (14) selon l'une des revendications 5 à 9, et/ou au moins un ou plusieurs groupes structurels formant siège (16) selon l'une des revendications 1 à 4.
